(19)

Europäisches
Patentamt
European
Patent Office
Office européen
des brevets

(11) **EP 4 137 458 A1**

(12) **EUROPEAN PATENT APPLICATION**
published in accordance with Art. 153(4) EPC

(43) Date of publication:
**22.02.2023 Bulletin 2023/08**

(21) Application number: **21787811.5**

(22) Date of filing: **16.04.2021**

(51) International Patent Classification (IPC):
**C01B 39/24** (2006.01)    **B01J 29/08** (2006.01)

(52) Cooperative Patent Classification (CPC):
**B01J 29/08; C01B 39/24**

(86) International application number:
**PCT/JP2021/015709**

(87) International publication number:
**WO 2021/210674 (21.10.2021 Gazette 2021/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.04.2020 JP 2020073626**

(71) Applicant: **JGC Catalysts and Chemicals Ltd.
Kawasaki-shi, Kanagawa 212-0013 (JP)**

(72) Inventors:
• **HAMASAKI, Yuichi
Kitakyushu-shi, Fukuoka 808-0027 (JP)**
• **INAKI, Chizu
Kitakyushu-shi, Fukuoka 808-0027 (JP)**
• **TSURUTA, Shunji
Kitakyushu-shi, Fukuoka 808-0027 (JP)**

(74) Representative: **Gille Hrabal
Partnerschaftsgesellschaft mbB
Patentanwälte
Brucknerstraße 20
40593 Düsseldorf (DE)**

(54) **FAUJASITE TYPE ZEOLITE AND METHOD FOR PRODUCING SAME**

(57)    A faujasite-type zeolite has an IR spectrum in which the IR spectrum has an absorption band 1 including surface silanol groups and having a local maximum in a range from 3730 $cm^{-1}$ to 3760 $cm^{-1}$, and an absorption band 2 including acidic hydroxyl groups and having a local maximum in a range from 3550 $cm^{-1}$ to 3700 $cm^1$, a ratio (h1/h2) of a peak height (h1) of the absorption band 1 to a peak height (h2) of the absorption band 2 being less than 1.2.

FIG.1

EP 4 137 458 A1

**Description**

TECHNICAL FIELD

The present invention relates to a faujasite-type zeolite with fewer surface silanol groups and a manufacturing method thereof.

BACKGROUND ART

A material name, zeolite, is a collective term for crystalline porous aluminosilicates. Zeolite has been widely used as a catalyst, an adsorbent, a membrane, and the like for a large number of industrial processes including petroleum refining and petrochemistry. For instance, a fluid catalytic cracking process is an important process to crack a heavy oil part contained in a petroleum using a catalyst to obtain a high-value-added fraction such as gasoline. A porous material containing a strong solid acid, or faujasite-type zeolite, has been used as the catalyst for the process since a long time ago. The faujasite-type zeolite has also been used as an adsorbent since a long time ago.

It has been known that the properties of the faujasite-type zeolite are significantly influenced by a ratio between Si and Al. The ratio is usually referred to as silica-alumina ratio (SAR) and expressed as a molar ratio of $SiO_2/Al_2O_3$. It has been known that, for instance, an increase in the silica-alumina ratio reduces Al in a framework of a zeolite and, consequently, reduces solid acid derived from Al in the framework, causing hydrophobicity (a low affinity for water) to be exhibited. Conversely, a reduction in the silica-alumina ratio increases the solid acid derived from Al in the framework, causing hydrophilicity to be exhibited.

A known method of increasing the silica-alumina ratio in the framework of a faujasite-type zeolite is a dealumination treatment such as 1) a water vapor hydrothermal treatment, 2) an EDTA treatment, or 3) an ammonium hexafluorosilicate treatment (Non-Patent Literature 1). The application of such a treatment makes it possible to synthesize a faujasite-type zeolite with a high silica-alumina ratio (Patent Literature 1).

CITATION LIST

PATENT LITERATURE(S)

Patent Literature 1: JP 62-216913 A

NON-PATENT LITERATURE(S)

Non-Patent Literature 1: Ono, Yoshio. & Yashima, Tatsuaki. (Ed.), "Zeoraito no Kagaku to Kougaku (science and engineering of zeolite)", ver. 1, KODANSHA LTD., July 10, 2000, pp.119-134

SUMMARY OF THE INVENTION

PROBLEM(S) TO BE SOLVED BY THE INVENTION

In a case where a hydrophobic faujasite-type zeolite is synthesized by the methods of Non-Patent Literature 1 and Patent Literature 1, aluminum is removed from the framework of zeolite, resulting in reducing solid acid.

In light of such circumstances, an object of the invention is to provide a faujasite-type zeolite that is hydrophobic and rich in solid acid.

MEANS FOR SOLVING THE PROBLEM(S)

The inventors focused attention on surface silanol groups in a faujasite-type zeolite and tried reducing the surface silanol groups. The inventors have found that application of a method including dealuminating a faujasite-type zeolite, subsequently removing an Al compound remaining on a surface thereof with acid, and performing a steam treatment at a specific temperature makes it possible to obtain a faujasite-type zeolite that exhibits a lower affinity for water (a higher hydrophobicity) with an amount of solid acid in the zeolite maintained.

That is to say, a faujasite-type zeolite according to an aspect of the invention has an IR spectrum including: an absorption band 1 including surface silanol groups and having a local maximum in a range from 3730 cm$^{-1}$ to 3760 cm$^{-1}$; and an absorption band 2 including acidic hydroxyl groups and having a local maximum in a range from 3550 cm$^{-1}$ to 3700 cm$^{-1}$, a ratio (h1/h2) of a peak height (h1) of the absorption band 1 to a peak height (h2) of the absorption band 2 being less than 1.2.

Moreover, a method of manufacturing a faujasite-type zeolite according to another aspect of the invention includes: applying a steam treatment to a faujasite-type zeolite at a temperature in a range from 500 degrees C to 800 degrees C to extract aluminum from a framework of the zeolite for dealumination; applying an acid treatment to the faujasite-type zeolite obtained through the dealumination to remove the aluminum extracted from the framework; and applying a steam treatment to the faujasite-type zeolite obtained through the acid treatment at a temperature in a range from 300 degrees C to 650 degrees C.

According to the above aspects of the invention, a faujasite-type zeolite that is hydrophobic and rich in solid acid and a method for manufacturing the faujasite-type zeolite can be obtained.

BRIEF DESCRIPTION OF DRAWING(S)

Fig. 1 is an IR spectrum of a faujasite-type zeolite obtained in Example 1.
Fig. 2 is an IR spectrum of a faujasite-type zeolite obtained in Comparative Example 1.
Fig. 3 is an IR spectrum of a faujasite-type zeolite obtained in Comparative Example 2.
Fig. 4 illustrates a relationship between a water adsorption amount and an amount of temperature-programmed desorption of ammonia of each of faujasite-type zeolites obtained in Example and Comparative Example.

DESCRIPTION OF EMBODIMENT(S)

A detailed description will be made below on a faujasite-type zeolite of an exemplary embodiment of the invention.

In the faujasite-type zeolite of the exemplary embodiment of the invention (hereinafter, also referred to as "the present zeolite"), an amount of surface silanol groups, which has an influence on an affinity for water, and an amount of acidic hydroxyl groups, which has an influence on a solid acidity, are specified by a ratio in peak height of an absorption band obtained from an IR spectrum. That is to say, in the IR spectrum, a ratio (h1/h2) between a peak height (h1) of an absorption band 1 (surface silanol groups) having a local maximum in a range from 3730 cm$^{-1}$ to 3760 cm$^{-1}$ and a peak height (h2) of an absorption band 2 (acidic hydroxyl groups) having a local maximum in a range from 3550 cm$^{-1}$ to 3700 cm$^{-1}$ is less than 1.2. The ratio is lowered with a reduction in the amount of the surface hydroxyl groups and an increase in the amount of the acidic hydroxyl groups. The lower the ratio is, the more favorable it is; however, a lower limit thereof may be 0.01. In addition, the ratio is preferably in a range from 0.01 to 1.0. With the ratio being lowered, the present zeolite of the invention tends to have a lower affinity for water (be more hydrophobic) to increase the amount of solid acid. Further, the ratio is more preferably in a range from 0.1 to 0.8.

It should be noted that in a case where a plurality of peaks are in the range from 3730 cm$^{-1}$ to 3760 cm$^{-1}$ and the range from 3550 cm$^{-1}$ to 3700 cm$^{-1}$, the highest peak height of the peak among the peak heights of the plurality of peaks is defined as the peak height of each of the absorption bands.

A silica-alumina ratio of the present zeolite is preferably in a range from 10 to 200. The silica-alumina ratio is calculated from a composition ratio of the present zeolite. A rise in the silica-alumina ratio makes a silica-alumina ratio of the framework likely to rise, thus making the present zeolite likely to have a lower affinity for water (be more hydrophobic). However, if the silica-alumina ratio is extremely high, aluminum in the framework is likely to decrease, resulting in a decrease in the amount of the solid acid. Accordingly, the silica-alumina ratio of the present zeolite is more preferably in a range from 30 to 150.

A unit cell size of the present zeolite is preferably 2.430 nm or more. The unit cell size according to the exemplary embodiment of the invention is an index indicating the silica-alumina ratio of the framework of the present zeolite. The unit cell size increases with an increase in aluminum in the framework (a decrease in the silica-alumina ratio of the framework), whereas the unit cell size decreases with a decrease in aluminum in the framework (an increase in the silica-alumina ratio of the framework). If the unit cell size of the present zeolite is extremely low, the amount of the solid acid in the zeolite decreases due to a decrease in aluminum in the framework. In addition, if the unit cell size of the present zeolite is extremely high, the affinity for water is likely to be high. Accordingly, the present zeolite is more preferably in a range from 2.430 nm to 2.440 nm, particularly preferably in a range more than 2.431 nm and equal to or less than 2.435 nm.

It is more preferable that the present zeolite have a higher crystallinity. Crystallinity of a zeolite has an influence on durability and solid acid properties of the zeolite. According to the exemplary embodiment, an intensity of a diffraction peak derived from a faujasite structure obtained by X-ray diffraction measurement is used as an index indicating the crystallinity of the zeolite. Specifically, a faujasite-type zeolite obtained by a specific method is defined as a reference substance and an intensity ratio of a peak derived from a faujasite structure obtained by X-ray diffraction measurement is defined as an index indicating the crystallinity of the present zeolite. The intensity ratio of the present zeolite is preferably 1.00 or more, more preferably 1.40 or more. It is obvious to those skilled in the art that the higher the crystallinity is, the more preferable it is. An upper limit of the crystallinity of the present zeolite may be 3.00 or less.

A specific surface area of the present zeolite is preferably 650 $m^2$/g or more. A zeolite usually has an extremely large specific surface area by virtue of a porous structure derived from a framework thereof. In a case where the specific surface area of the present zeolite is lower than 650 $m^2$/g, the porous structure derived from the framework of the present zeolite would fail to sufficiently develop, which may result in a decrease in the amount of the solid acid in the zeolite. The larger the specific surface area of the faujasite-type zeolite is, the more preferable it is; however, an upper limit of the specific surface area may be 850 $m^2$/g or less. More specifically, the specific surface area may be in a range from 700 $m^2$/g to 750 $m^2$/g.

An alkali metal content of the present zeolite is preferably low. Alkali metal poisons solid acid contained in a zeolite in some cases. Accordingly, the alkali metal content of the present zeolite is preferably 0.3 mass% or less, more preferably 0.2 mass% or less as $M_2O$ where M denotes alkali metal. The present zeolite is likely to be poisoned especially by Na among alkali metal, so that it is preferable that the content of Na be low.

An average particle size of the present zeolite is preferably in a range from 0.1 $\mu$m to 10 $\mu$m, more preferably in a range from 0.5 $\mu$m to 5 $\mu$m, particularly preferably in a range from 0.7 $\mu$m to 3 $\mu$m. In a case where the zeolite is used as a catalyst, the average particle size in the above range makes activity and durability of the catalyst likely to be excellent.

A volume of pores in a range from 3.5 nm to 5 nm of the present zeolite calculated from a pore distribution measured by a nitrogen adsorption method is less than 0.03 $cm^3$/g, more preferably 0.02 $cm^3$/g or less, particularly preferably 0.01 $cm^3$/g or less. A decrease in the volume of the pores, which correspond to mesopores, makes an exterior surface of the zeolite likely to decrease, enabling reducing a water adsorption amount.

The amount of temperature-programmed desorption of ammonia of the present zeolite is preferably in a range from 0.1 mmol/g to 1.3 mmol/g, more preferably in a range from 0.15 mmol/g to 1 mmol/g, particularly preferably in a range from 0.25 mmol/g to 1 mmol/g. The amount of temperature-programmed desorption of ammonia is an index indicating the amount of solid acid in a substance.

The water adsorption amount of the faujasite-type zeolite is an index indicating the hydrophobicity; the smaller the amount, the higher hydrophobicity is. The water adsorption amount of the present zeolite is preferably 16% or less, more preferably 10% or less, particularly preferably 5% or less.

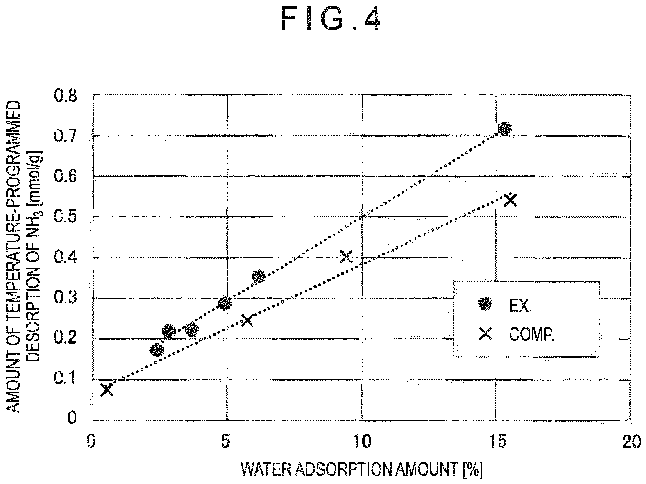

A ratio of the amount of the temperature-programmed desorption of ammonia to the water adsorption amount, (the amount of temperature-programmed desorption of ammonia)/(the water adsorption amount) of the present zeolite, is preferably in a range from 0.045 to 0.1, more preferably in a range from 0.05 to 0.1, particularly preferably in a range from 0.06 to 0.1. The amount of temperature-programmed desorption of ammonia of the faujasite-type zeolite is influenced by the content of aluminum in the zeolite framework; the amount of temperature-programmed desorption of ammonia tends to decrease with a decrease in the content of aluminum in the zeolite framework. On the other hand, the water adsorption amount of the faujasite-type zeolite is influenced by the content of aluminum in the zeolite framework and the amount of the surface silanol groups; the water adsorption amount tends to decrease with a decrease in the content of aluminum and the amount of the surface silanol groups. Since the present zeolite is smaller in the amount of the surface silanol groups than a typical faujasite-type zeolite, a water adsorption amount comparable to that of the typical faujasite-type zeolite allows for increasing the amount of temperature-programmed desorption of ammonia (see Fig. 4).

The present zeolite, which is hydrophobic and rich in solid acid, is usable as, for instance, a component of a fluid catalytic cracking catalyst or a hydrocracking catalyst for petroleum refining. In addition, the present zeolite is also usable as an adsorbent.

A detailed description will be made below on a method for manufacturing a faujasite-type zeolite of the exemplary embodiment of the invention.

The method for manufacturing a faujasite-type zeolite of the exemplary embodiment of the invention (hereinafter, also referred to as "the present manufacturing method") includes:

applying a steam treatment to a faujasite-type zeolite at a temperature in a range from 500 degrees C to 800 degrees C to extract aluminum from a framework of the zeolite for dealumination;
applying an acid treatment to the faujasite-type zeolite obtained through the dealumination to remove the aluminum extracted from the framework; and
applying a steam treatment to the faujasite-type zeolite obtained through the acid treatment at a temperature in a range from 300 degrees C to 650 degrees C.

The present manufacturing method includes applying a steam treatment to a faujasite-type zeolite at a temperature in a range from 500 degrees C to 800 degrees C to extract aluminum from a framework of the zeolite for dealumination. Aluminum can also be extracted from the framework of the faujasite-type zeolite by an acid treatment; however, these methods are likely to cause damage to the framework of the zeolite. Accordingly, it is important to perform the dealumination prior to the later-described acid treatment. It should be noted that the extracted aluminum remains as aluminum compounds on the surface of the zeolite. This remaining aluminum is also referred to as an extra-framework aluminum species.

The faujasite-type zeolite used in the dealumination may be purchased commercially available one or may be synthesized by a conventionally known method. For instance, a faujasite-type zeolite is obtained by adding Si material and Al material and further adding Na material and water and, subsequently, performing a hydrothermal treatment at a temperature in a range approximately from 80 degrees C to 120 degrees C. A silica-alumina ratio of the faujasite-type zeolite usable as the material is preferably in a range from 2 to 10. The faujasite-type zeolite with a silica-alumina ratio in the above range is easy to industrially mass-manufacture. The faujasite-type zeolite is more preferably ion-exchanged with ammonium ions.

In the dealumination, the faujasite-type zeolite is preferably steamed at a temperature in a range from 600 degrees C to 700 degrees C. By virtue of performing the steam treatment in the above temperature range, aluminum can be efficiently extracted from the framework of the zeolite.

In the dealumination, a steam treatment time is preferably in a range approximately from 1 hour to 24 hours. Although depending on the above-described steam treatment temperature, an extremely reduced treatment time compared with the above range is not sufficient for aluminum to be sufficiently extracted from the framework by the steam treatment in some cases and thus not favorable. In addition, an increased steam treatment time compared with the above range is also not favorable in terms of productivity.

A steam concentration for the dealumination is 50% or more of the amount of saturated water vapor, preferably 90% or more. When the steam treatment is performed in a state where the amount of saturated water vapor is low, the framework of the zeolite tends to be easily broken. This is supposed to be because a defect caused due to the generation of the extra-framework aluminum species makes the framework unstable. In such a state, the framework of the zeolite is easily breakable by heat. However, with the amount of saturated water vapor being in the above-described range, the framework of the zeolite tends to be difficult to break.

A unit cell size of the faujasite-type zeolite obtained through the dealumination is preferably in a range from 2.430 nm to 2.445 nm. The steam treatment is performed such that the unit cell size falls within the above range, which makes the framework of the faujasite-type zeolite difficult to break during the later-described acid treatment.

The present manufacturing method includes applying an acid treatment to the faujasite-type zeolite obtained through the dealumination to remove the aluminum extracted from the framework. For the acid treatment, the extra-framework aluminum species remaining on the surface of the steamed zeolite are removed with use of sulfuric acid, EDTA (ethylenediaminetetraacetate), or the like.

For the acid treatment, a conventionally known acid is usable as the acid. For instance, sulfuric acid, nitric acid, hydrochloric acid, acetic acid, EDTA, and citric acid are usable as the acid. For the acid treatment, it is preferable that an inexpensive inorganic acid be used.

A temperature of the acid treatment in this step is preferably in a range from 50 degrees C to 98 degrees C, more preferably in a range from 65 degrees C to 95 degrees C. In this step, it is preferable that the acid treatment be performed at a relatively high temperature to remove the extra-framework aluminum species remaining on the surface of the zeolite as much as possible.

Salt containing ammonium ions may be added to an acid solution for this step. By virtue of performing the acid treatment using the acid solution where ammonium ions exist as above, alkali metal contained in the faujasite-type zeolite is likely to be removed.

It is preferable that the acid for the acid treatment be contained in a solution in an amount sufficient to cause a mol number of protons derived from the acid to fall within a range from 1.2 to 8.3 with respect to 1 mol of aluminum contained in the faujasite-type zeolite obtained through the dealumination. For instance, in a case where the faujasite-type zeolite containing 1 mol aluminum (Al) is to be acid-treated with sulfuric acid ($H_2SO_4$), it is preferable that the sulfuric acid contained in the acid solution be adjusted to fall within a range from 0.6 mol to 4.2 mol.

Time of the acid treatment in this step, which depends on the temperature of the acid treatment or the amount of acid, is preferably in a range approximately from 0.5 hours to 24 hours. As long as the time of the acid treatment is within approximately the above range, the object of the acid treatment can be sufficiently achieved. The time of the acid treatment longer than the above range does not cause any disadvantage, however, is not favorable in terms of productivity.

The acid solution and the zeolite having been subjected to the acid treatment can be separated into solid and liquid by a method such as filtering. In addition, at this time, a component derived from the acid solution remains in the separated zeolite in some cases. Accordingly, it is preferable that the separated zeolite be again suspended in an ion-exchange water and subjected to a rinsing treatment such as pouring warm water whose temperature is less than 75 degrees C over the zeolite on a filter fabric. It is favorable that the rinsing treatment be repeated until a conductivity of the filtrate reaches 0.1 mS/cm or less. A zeolite can be obtained by drying the separated zeolite at a temperature in a range from 80 degrees C to 200 degrees C.

A unit cell size of the faujasite-type zeolite obtained through the acid treatment is preferably in a range from 2.430 nm to 2.440 nm. The acid treatment is performed such that the unit cell size falls within the above range, which makes it possible to maintain the amount of the solid acid in a faujasite-type zeolite obtained through the later-described steam treatment.

The present manufacturing method includes applying a steam treatment to the faujasite-type zeolite obtained through the acid treatment at a temperature in a range from 300 degrees C to 650 degrees C. In this step, extraction of aluminum less occurs by virtue of removal of aluminum in the framework of the zeolite during the above-described dealumination and thus movement of Si occurs in the vicinity of the surface of the zeolite. At this time, it is supposed that surface silanol groups generated with the removal of the extra-framework aluminum species during the above-described acid treatment are bonded to Si, resulting in reducing the surface silanol groups on the zeolite.

In this step, it is preferable that the faujasite-type zeolite obtained through the above-described acid treatment be steamed at a temperature in a range from 400 degrees C to 650 degrees C. By virtue of performing the steam treatment in the above temperature range, the movement of Si in the vicinity of the surface of the zeolite is facilitated and aluminum in the framework is unlikely to be extracted, which makes it possible to maintain the amount of the solid acid and reduce the surface silanol groups in the zeolite.

In this step, it is preferable that a steam treatment time be in a range approximately from 0.5 hours to 12 hours. In this step, if the time of steam treatment is extremely long, aluminum in the framework is likely to be extracted depending on the treatment temperature. If the time of steam treatment is extremely short, Si less moves, resulting in a small amount of a reduction in the surface silanol groups in some cases. Accordingly, it is preferable that the steam treatment time be in a range from one hour to six hours.

A steam concentration in this step is 50% or more of the amount of saturated water vapor, preferably 90% or more. In this step, the higher the steam concentration is, the more the movement of Si in the vicinity of the surface of the zeolite can be accelerated.

Examples

The present zeolite and the present manufacturing method thereof will be described below in detail with reference to Examples; however, the invention is by no means limited to these examples.

Measurement and evaluation in Examples of the invention were performed by the following methods.

Analysis of Composition

Si, Al, and Na contents of a sample were measured using an X-ray fluorescence spectrometer (RIX-3000). From the result of the measurement, the Si and Al contents were converted to $SiO_2$ and $Al_2O_3$, respectively, and a silica-alumina ratio ($SiO_2/Al_2O_3$ molar ratio) was calculated.

Observation of Crystal Structure

The sample crushed in a mortar was set in an X-ray diffractometer (manufactured by Rigaku Corporation, "RINT-Ultima", radiation source: CuKα) and scanned until $2\theta = 14$ to 33 degrees to perform X-ray diffraction measurement. Judging from an obtained X-ray diffraction pattern, a sample whose peak was observed in a diffraction plane belonging to a faujasite structure (FAU) was determined to have a faujasite structure. Specifically, presence/absence of diffraction peaks belonging to (331), (511), (440), (533), (642), and (555) planes was checked. It should be noted that positions of the peaks belonging to these diffraction planes can be confirmed from a technical document (M. M. J. Treacy, J. B. Higgins, COLLECTION OF SIMULATED XRD POWDERPATTERNS FOR ZEOLITES, Fifth Revised Edition, Elsevier). It should be noted that as long as the position of the peak, which may vary to some extent with measurement conditions or the like, is in a $\pm 0.5$-degree range relative to a peak position described in the above document, the sample can be considered to have a peak derived from the faujasite structure.

IR Measurement

20 to 25 mg of a sample powder was compacted into a 20-mm diameter pellet. Prior to the measurement, the pellet was put in a vacuum heating pretreatment device manufactured by MAKUHARI RIKAGAKU and pretreated at 300 degrees C for three hours under high vacuum ($10^{-3}$ Pa). After the cell was cooled to 50 degrees C, an IR was measured using FTIIR-6100 manufactured by JASCO Corporation under the following conditions.

Detector: TGS
Resolution: 2.0 cm$^{-1}$
Measurement range: 4,000 to 800 cm$^{-1}$

The number of integrations: 100 times

A baseline was set in an obtained spectrum by two-point correction, or connecting an absorbance at 4,000 $cm^{-1}$ and an absorbance at 3,000 $cm^{-1}$ to each other with a straight line. Then, a peak height (h1) of an absorption band (surface silanol groups) having a local maximum in a range from 3730 $cm^{-1}$ to 3760 $cm^{-1}$ and a peak height (h2) of an absorption band (acidic hydroxyl groups) having a local maximum in a range from 3550 $cm^{-1}$ to 3700 $cm^{-1}$ were measured and a ratio in peak height (h1/h2) was calculated.

It should be noted that in a case where a plurality of peaks were in the range from 3730 $cm^{-1}$ to 3760 $cm^{-1}$ and the range from 3550 $cm^{-1}$ to 3700 $cm^{-1}$, the highest peak height of the peak among the peak heights of the plurality of peaks was defined as the peak height of each of the absorption bands.

Measurement of Unit Cell Size

Approximately 2/3 parts by weight of the sample powder and approximately 1/3 parts by weight of an internal standard, or $TiO_2$ anatase-type powder (manufactured by KANTO CHEMICAL CO., INC., titanium oxide (IV) (anatase-type)), were weighed in a balance and mixed in a mortar. The resulting powder was set in an X-ray diffractometer (manufactured by Rigaku Corporation, "RINT-Ultima", radiation source: $CuK\alpha$) and scanned until $2\theta = 23$ to 33 degrees to measure an X-ray diffraction pattern. From the obtained pattern, a unit cell size was calculated by using $2\theta$, which indicates a center of a peak half width of each of anatase-type $TiO_2$, and a (533) plane and a (642) plane of faujasite-type zeolite, from the following numerical formulae (1) to (3).

Numerical Formula 1

$$(1)\dots \text{lattice constant seen in (533) plane} = \frac{5.05506}{\sin\left(\pi \times \left(\frac{(25.3068 - (C - A))}{2}\Big/180\right)\right)}$$

$$(2)\dots \text{lattice constant seen in (642) plane} = \frac{5.76881}{\sin\left(\pi \times \left(\frac{(25.3068 - (B - C))}{2}\Big/180\right)\right)}$$

$$(3)\dots \text{lattice constant UD}$$

$$= \frac{\text{lattice constant seen in (533) plane} + \text{lattice constant seen in (642) plane}}{2}$$

X-ray Diffraction Intensity Ratio

The sample powder crushed in the mortar was set in an X-ray diffractometer (manufactured by Rigaku Corporation, "RINT-Ultima", radiation source: $CuK\alpha$) and scanned until $2\theta = 14$ to 33 degrees to measure an X-ray diffraction pattern. From the obtained pattern, a total of intensities of diffraction peaks belonging to (331), (511), (440), (533), (642), and (555) planes of the T, faujasite structure (FAU) was obtained and a percentage thereof to a total of peak intensities of a commercially available faujasite-type zeolite (manufactured by Zeolyst International Inc., CBV720) measured in a similar manner was calculated to calculate an X-ray diffraction intensity ratio.

Measurement of Specific Surface Area

The sample powder pretreated at 500 degrees C for one hour under an inert gas atmosphere was put in a sample cell for measurement. A mixed gas with a nitrogen gas concentration of 30 vol% and a helium gas concentration of 70 vol% was caused to sufficiently flow under a -196-degree-C atmosphere inside a measurement device (manufactured by BEL JAPAN, INC. "MR-6") to cause nitrogen to be adsorbed on the sample powder. Then, the atmosphere temperature was raised to 25 degrees C to cause the nitrogen adsorbed on the sample powder to be desorbed and the amount of desorption was detected using a TCD detector. The detected amount of desorption of nitrogen was converted to a specific surface area by using a cross-sectional area of a nitrogen molecule, thereby obtaining a specific surface area per one gram of the sample powder.

Pore Distribution Measurement by Nitrogen Adsorption Method

Pore distribution measurement was performed by a nitrogen adsorption method under the following conditions.

Measurement method: nitrogen adsorption method

Measurement device: BEL SORP-mini II (manufactured by MicrotracBEL Corp.)
Sample amount: 0.05g, approximately
Pretreatment: 500 degrees C, one hour (under vacuum)
Relative pressure range: from 0 to 1.0

A mesopore distribution was calculated from an adsorption isotherm by a BJH method and a pore volume of pores in a range from 3.5 to 5.0 nm in diameter and a pore volume of pores in a range from 3.5 to 60 nm in diameter were calculated.

Primary Particle Size Evaluation

After the sample powder was dispersed on a sample plate, primary particles were observed using a scanning electron microscope (manufactured by JEOL Ltd.: JSM-7600S) (an acceleration voltage of 1.0 kV, a magnification of ten-thousand-fold to fifty-thousand-fold). 50 primary particles were selected at random from an obtained image and an average value of longer diameters of the particles was defined as an average particle size.

Evaluation of Water Adsorption Amount

1.0 g of the sample powder was pretreated at 300 degrees C for three hours and caused to absorb moisture for five hours under an atmosphere at 40 degrees C and 40% humidity using a thermo-hygrostat manufactured by TOKYO RIKAKIKAI CO, LTD, "KCL-2000." A water adsorption amount was calculated from weights of the sample before and after absorption of moisture as follows.

$$\text{water adsorption amount (\%)} = (\text{weight of sample after absorption of moisture} - \text{weight of sample before absorption of moisture})/\text{weight of sample before absorption of moisture} \times 100$$

Evaluation of Amount of Solid Acid (Amount of Temperature-Programmed Desorption of $NH_3$)

0.05 g of the sample powder pretreated at 500 degrees C for one hour was weighed and the amount of temperature-programmed desorption of $NH_3$ was measured using a "BELCAT II" device manufactured by MicrotracBEL Corp. After a temperature of the sample powder was raised to 500 degrees C over the course of one hour by flowing He and maintained at 500 degrees C for one hour, the sample powder was cooled to 100 degrees C by flowing He. The sample powder was maintained at 100 degrees C for 30 minutes by flowing $NH_3$ 5%/He. Then, the sample was purged with He at 100 degrees C for 30 minutes. While the temperature was raised from 100 degrees C to 700 degrees C at a rate of 10 degrees C/min in a flow of He, desorbed $NH_3$ was detected using a TCD.

Example 1

Dealumination Step

A faujasite-type zeolite (hereinafter, "NaY") with a silica-alumina ratio of 5.0, a unit cell size of 2.466 nm, a specific surface area of 720 $m^2$/g, and a Na content of 13.0 mass% as $Na_2O$ was prepared. 50.0 kg of the NaY was added to 500 L water whose temperature is 60 degrees C and 14.0 kg of ammonium sulfate was further added thereto to obtain a suspension. The suspension was stirred at 70 degrees C for one hour and filtered. A solid obtained by filtration was rinsed with water. Subsequently, the solid was rinsed with an ammonium sulfate solution provided by dissolving 14.0 kg ammonium sulfate in 500 L water whose temperature is 60 degrees C, further rinsed with 500 L water whose temperature is 60 degrees C, and dried at 130 degrees C for 20 hours to obtain an approximately 45 kg faujasite-type zeolite (hereinafter, "65NH$_4$Y") where approximately 65 mass% of Na contained in NaY was ion-exchanged with ammonium ions (NH$_4^+$). A Na content of the NH$_4$Y was 4.5 mass% as Na$_2$O. 40 kg of the NH$_4$Y was steamed at 670 degrees C for one hour under a saturated water vapor atmosphere to obtain a dealuminated faujasite-type zeolite (hereinafter, "USY").

All of the USY was added in 400 L water whose temperature is 60 degrees C and, subsequently, 49.0 kg ammonium sulfate was added thereto to obtain a suspension. The suspension was stirred at 90 degrees C for one hour and filtered. A solid obtained by filtration was rinsed with 2400 L water whose temperature is 60 degrees C. Subsequently, the solid was dried at 130 degrees C for 20 hours to obtain an approximately 37 kg faujasite-type zeolite (hereinafter, "93NH$_4$USY") where approximately 93 mass% of Na contained in the initial NaY was ion-exchanged with NH$_4$. A composition of the 93NH$_4$USY was analyzed to find that a silica-alumina ratio was 5.0 and a Na content was 1.1 mass% as Na$_2$O. 10.0 kg of the 93NH$_4$USY was steamed at 670 degrees C for two hours under a saturated water vapor atmosphere to obtain an approximately 2.7 kg zeolite for an acid treatment. At this time, a unit cell size of the zeolite for an acid treatment was 2.438 nm.

Acid Treatment Step

After 8.0 kg of the zeolite for an acid treatment was suspended in 62 L water having a room temperature and 27.2 kg of 25 mass% sulfuric acid was gradually added thereto to prepare an acid solution, the acid solution was raised to a temperature of 75 degrees C and stirred for four hours. A solid obtained by filtering the stirred acid solution was rinsed with a 96 L ion-exchange water whose temperature is 60 degrees C and, further, dried at 110 degrees C for 20 hours. A composition of the obtained zeolite was analyzed to find that a silica-alumina ratio was 64 and a unit cell size was 2.431 nm.

Steam Treatment Step

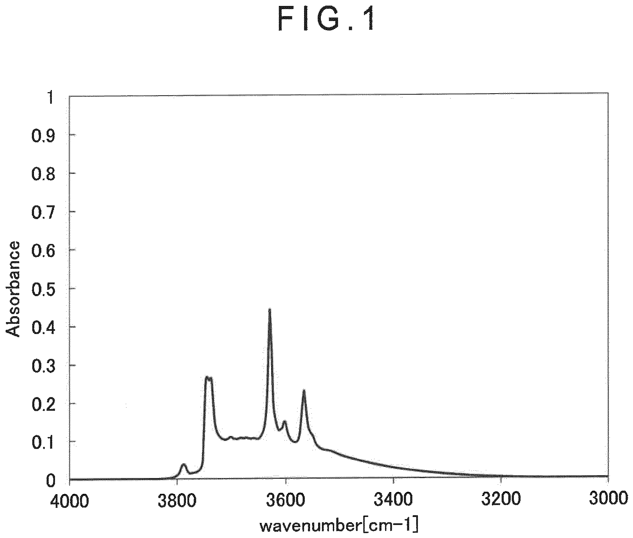

200 g of the acid-treated zeolite obtained in the above-described step was steamed at 500 degrees C for two hours under a saturated water vapor atmosphere. The zeolite obtained through the steam treatment was measured and evaluated as described above. Table 1 shows the results. In addition, Fig. 1 illustrates the IR spectrum.

Example 2

A zeolite was obtained in a similar manner to that of Example 1 except that the steam temperature in the steam treatment step was 600 degrees C. The zeolite was measured and evaluated as in Example 1. Table 1 shows the results.

Example 3

A zeolite was obtained in a similar manner to that of Example 2 except that the steam concentration was 50% of the amount of saturated water vapor in the steam treatment step. The zeolite was measured and evaluated as in Example 1. Table 1 shows the results.

Example 4

A zeolite was obtained in a similar manner to that of Example 1 except that the amount of the sulfuric acid was 22.1 kg and the treatment temperature was 90 degrees C in the acid treatment step and the steam temperature in the steam treatment step was 400 degrees C. The zeolite was measured and evaluated as in Example 1. Table 1 shows the results.

Example 5

A zeolite was obtained in a similar manner to that of Example 1 except that the amount of the sulfuric acid was 20.1 kg and the treatment temperature was 90 degrees C in the acid treatment step and the steam temperature in the steam treatment step was 350 degrees C. The zeolite was measured and evaluated as in Example 1. Table 1 shows the results.

Example 6

A zeolite was obtained in a similar manner to that of Example 1 except that the amount of the sulfuric acid was 42.0 kg and the treatment temperature was 90 degrees C in the acid treatment step and the steam temperature in the steam treatment step was 400 degrees C. The zeolite was measured and evaluated as in Example 1. Table 1 shows the results.

Comparative Example 1

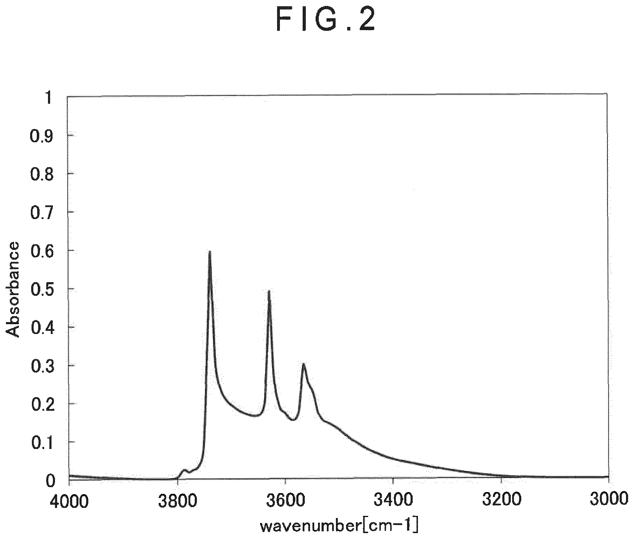

The zeolite obtained by the acid treatment step of Example 1 was measured and evaluated as in Example 1. Table 1 shows the results. In addition, Fig. 2 illustrates the IR spectrum.

Comparative Example 2

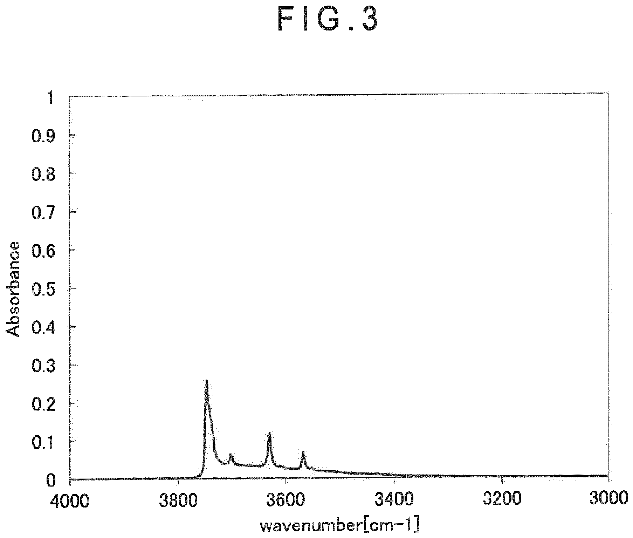

A zeolite was obtained in a similar manner to that of Example 1 except that the temperature of the steam treatment in the steam treatment step was 700 degrees C. The zeolite was measured and evaluated as in Example 1. Table 1 shows the results. In addition, Fig. 3 illustrates the IR spectrum.

Comparative Example 3

A commercially available faujasite-type zeolite (manufactured by Zeolyst International Inc., CBV720) was measured and evaluated as in Example 1. Table 1 shows the results.

Comparative Example 4

The zeolite obtained by the acid treatment step of Example 6 was measured and evaluated as in Example 1. Table 1 shows the results.

Table 1

| | Ex. 1 | Ex. 2 | Ex. 3 | Ex. 4 | Ex. 5 | Ex. 6 | Comp. 1 | Comp. 2 | Comp. 3 | Comp. 4 |
|---|---|---|---|---|---|---|---|---|---|---|
| Zeolite Framework Type | FAU | FAU | FAU | FAU | FAU | FAU | FAU | FAU | FAU | FAU |
| SAR [-] | 64 | 64 | 64 | 46 | 32 | 124 | 64 | 64 | 34 | 124 |
| IR Peak Height Ratio (h1/h2)[-] | 0.61 | 0.68 | 0.66 | 0.72 | 0.65 | 0.70 | 1.21 | 2.11 | 2.13 | 1.86 |
| Unit Cell Size [nm] | 2.432 | 2. 431 | 2.431 | 2. 432 | 2.435 | 2. 431 | 2. 431 | 2.429 | 2.429 | 2.431 |
| X-Ray Diffraction Intensity Ratio [-] | 1.45 | 1.47 | 1.45 | 1.41 | 1.41 | 1.41 | 1.39 | 1.45 | 1.00 | 1.41 |
| Specific Surface Area [m$^2$/g] | 742 | 730 | 746 | 725 | 762 | 729 | 758 | 699 | 787 | 743 |
| Na Content [mass%] | 0.03 | 0.03 | 0.03 | 0.14 | 0.07 | 0.02 | 0.03 | 0.04 | 0.02 | 0.02 |
| Average Particle Size [μm] | 1.1 | 1.1 | 1.1 | 1.1 | 1.1 | 1.1 | 1.1 | 1.1 | 1.2 | 1.1 |
| Pore Volume (3.5 to 5 nm) [cm$^3$/g] | 0.006 | 0.006 | 0.007 | 0.008 | 0.007 | 0.006 | 0.006 | 0.005 | 0.012 | 0.008 |

(continued)

|  | Ex. 1 | Ex. 2 | Ex. 3 | Ex. 4 | Ex. 5 | Ex. 6 | Comp. 1 | Comp. 2 | Comp. 3 | Comp. 4 |
|---|---|---|---|---|---|---|---|---|---|---|
| Pore Volume (3.5 to 60 nm) [cm$^3$/g] | 0.174 | 0.168 | 0.169 | 0.178 | 0.153 | 0.186 | 0.177 | 0.167 | 0.153 | 0.180 |
| Water Adsorption Amount [96] | 4. 9 | 2.4 | 2.8 | 6.2 | 15.3 | 3.7 | 9.4 | 0.6 | 15.5 | 5.8 |
| Amount of Temperature-Programmed Desorption of NH$_3$ [mmol/g] | 0.286 | 0.172 | 0.218 | 0. 355 | 0.717 | 0.223 | 0.405 | 0.074 | 0.542 | 0.243 |
| Amount of Temperature-Programmed Desorption of NH$_3$/ Water Adsorption Amount | 0.058 | 0.072 | 0.077 | 0.057 | 0.047 | 0.060 | 0.043 | 0.123 | 0.035 | 0.042 |

In comparison with the zeolites of Comparative Examples 1 to 4, the faujasite-type zeolites of Examples 1 to 6 each had a larger amount of temperature-programmed desorption of NH$_3$ (see Fig. 4) and had a larger amount of the solid acid when compared at the same water adsorption amount. Therefore, the present zeolite was hydrophobic and rich in solid acid.

**Claims**

1.   A faujasite-type zeolite having an IR spectrum, the IR spectrum comprising:

an absorption band 1 including surface silanol groups and having a local maximum in a range from 3730 cm$^{-1}$ to 3760 cm$^{-1}$; and
an absorption band 2 including acidic hydroxyl groups and having a local maximum in a range from 3550 cm$^{-1}$ to 3700 cm$^{-1}$, a ratio (h1/h2) of a peak height (h1) of the absorption band 1 to a peak height (h2) of the absorption band 2 being less than 1.2.

2.   The faujasite-type zeolite according to claim 1, wherein a silica-alumina ratio is in a range from 10 to 200.

3.   The faujasite-type zeolite according to claim 1 or 2, wherein a pore volume of a pore group of pores in a range from 3.5 nm to 5 nm in pore diameter measured by a nitrogen adsorption method is less than 0.03 g/cm$^3$.

4.   The faujasite-type zeolite according to any one of claims 1 to 3, wherein an amount of temperature-programmed desorption of NH$_3$ is in a range from 0.1 mmol/g to 1.3 mmol/g.

5.   The faujasite-type zeolite according to claim 4, wherein a ratio of the amount of temperature-programmed desorption of NH$_3$ to a water adsorption amount is in a range from 0.045 to 0.1.

6.   A method of manufacturing a faujasite-type zeolite, the method comprising:

applying a steam treatment to a faujasite-type zeolite at a temperature in a range from 500 degrees C to 800 degrees C to extract aluminum from a framework of the zeolite for dealumination;
applying an acid treatment to the faujasite-type zeolite obtained through the dealumination to remove the aluminum extracted from the framework; and

applying a steam treatment to the faujasite-type zeolite obtained through the acid treatment at a temperature in a range from 300 degrees C to 650 degrees C.

# FIG.1

# FIG.2

# FIG.3

# FIG.4

## INTERNATIONAL SEARCH REPORT

| International application No. |
| --- |
| PCT/JP2021/015709 |

**A. CLASSIFICATION OF SUBJECT MATTER**
Int.Cl. C01B39/24(2006.01)i, B01J29/08(2006.01)i
FI: C01B39/24, B01J29/08M

According to International Patent Classification (IPC) or to both national classification and IPC

**B. FIELDS SEARCHED**

Minimum documentation searched (classification system followed by classification symbols)
Int.Cl. C01B39/24, B01J29/08

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus(JDreamIII), JST7580(JDreamIII), JSTChina(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 8-253312 A (IDEMITSU KOSAN CO., LTD.) 01 October 1996 (1996-10-01), claims, paragraphs [0010]-[0012], examples | 1-5<br>6 |
| X | JP 3-205313 A (RES ASSOC RESIDUAL OIL PROCESS) 06 September 1991 (1991-09-06), comparative example 4 | 1 |
| X<br>Y | CN 104230633 A (CHINA PETROLEUM & CHEMICAL CORPORATION) 24 December 2014 (2014-12-24), claims, examples | 6<br>6 |
| Y | JP 2014-104372 A (NATIONAL UNIVERSITY CORPORATION TOTTORI UNIVERSITY) 09 June 2014 (2014-06-09), paragraph [0026] | 6 |

☐ Further documents are listed in the continuation of Box C.　☒ See patent family annex.

| | |
| --- | --- |
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
| --- | --- |
| 01 June 2021 | 15 June 2021 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

| INTERNATIONAL SEARCH REPORT<br>Information on patent family members | International application No.<br>PCT/JP2021/015709 |
|---|---|

| | | |
|---|---|---|
| JP 8-253312 A | 01 October 1996 | (Family: none) |
| JP 3-205313 A | 06 September 1991 | US 5338437 A<br>comparative example 4<br>EP 421422 A2<br>KR 10-1991-0007570 A |
| CN 104230633 A | 24 December 2014 | (Family: none) |
| JP 2014-104372 A | 09 June 2014 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62216913 A

**Non-patent literature cited in the description**

- Zeoraito no Kagaku to Kougaku (science and engineering of zeolite). KODANSHA LTD, 10 July 2000, 119-134

- **M. M. J. TREACY ; J. B. HIGGINS.** COLLECTION OF SIMULATED XRD POWDERPATTERNS FOR ZEOLITES. Elsevier